# EUROPÄISCHE PATENTSCHRIFT

(11) **EP 4 175 859 B1**
(45) Veröffentlichungstag und Bekanntmachung des Hinweises auf die Patenterteilung: **07.05.2025**
(21) Anmeldenummer: 21743063.6
(22) Anmeldetag: 29.06.2021
(51) Int. Cl.: B60T 8/88, B60T 17/22

(54) **VERFAHREN ZUM PRÜFEN EINES SELECT-HIGH-VENTILS**
METHOD FOR TESTING A SELECT-HIGH VALVE
PROCÉDÉ DE TEST D'UNE VANNE À SÉLECTION HAUTE

(30) Priorität: 01.07.2020 DE 102020117324
(43) Veröffentlichungstag der Anmeldung: 10.05.2023
(73) Patentinhaber: ZF CV Systems Global GmbH, 3006 Bern (CH)
(72) Erfinder: VAN THIEL, Julian, 30938 Grossburgwedel (DE)
(74) Vertreter: Ohlendorf, Henrike
(86) Internationale Anmeldenummer: PCT/EP2021/067859
(87) Internationale Veröffentlichungsnummer: WO 2022/002942

(56) Entgegenhaltungen:
- DE-A1- 102015 116 317

## Beschreibung

Die Erfindung betrifft ein Verfahren zum Prüfen eines Wechselventils in einem pneumatischen System, vorzugsweise elektronisch steuerbares pneumatisches Bremssystem, wobei das Wechselventil einen ersten Wechselventilanschluss, einen zweiten Wechselventilanschluss und einen dritten Wechselventilanschluss aufweist, wobei jeweils der höhere des am ersten Wechselventilanschluss und zweiten Wechselventilanschluss anliegenden Drucks an dem dritten Wechselventilanschluss ausgesteuert wird. Die Erfindung betrifft ferner ein pneumatisches System, vorzugsweise elektronisch steuerbares pneumatisches Bremssystem, für ein Fahrzeug, vorzugsweise Nutzfahrzeug, mit einem derartigen Wechselventil sowie ein Fahrzeug, vorzugsweise Nutzfahrzeug, mit einem pneumatischen System der vorstehend genannten Art.

Wechselventile, die den jeweils höheren des Drucks, der an den ersten und zweiten Anschlüssen anliegt, an den dritten Anschluss weiterleiten, werden auch "Select-High-Ventil" genannt. **In** Bremssystemen kommen derartige Wechselventile vielfältig zum Einsatz, beispielsweise um redundante Systeme anzukoppeln, redundante Drücke weiterzuleiten, oder andere Steuerungsaufgaben zu übernehmen. Insbesondere im Rahmen von redundanten Systemen kommen Wechselventile auch bei höheren Automatisierungsgraden zum Einsatz, insbesondere auf den SAE-Levels 2-5, insbesondere 3-5. Hier ist es wichtig, dass Methoden und Verfahren bereitstehen, solche Wechselventile zu prüfen, da bei Fahrzeugen von höheren Automatisierungsgraden menschliche Fahrer nicht mehr uneingeschränkt zur Verfügung stehen, um Fehler zu erkennen.

Grundsätzlich könnten zur Prüfung solcher Wechselventile zusätzliche, besondere Sensoren eingesetzt werden, die die Funktionsfähigkeit der Wechselventile prüfen. Dies ist jedoch aufwendig, erhöht den Bauraum und die Kosten, und ist im breiten Feld kaum wirtschaftlich einsetzbar. Dies insbesondere, wenn bedacht wird, dass in einem Bremssystem typischerweise eine Mehrzahl an solchen Wechselventilen eingesetzt wird.

Die DE102015116317 beschreibt eine elektro-pneumatische Parkbremseinrichtung eines Fahrzeugs, insbesondere eines Zugfahrzeugs einer Zugfahrzeug-Anhängerkombination, welche wenigstens Folgendes umfasst: Eine elektronische Steuereinrichtung, wenigstens einen Druckluftvorrat, eine elektro-pneumatische Parkbremssteuereinrichtung, welche wenigstens ein von der elektronischen Steuereinrichtung gesteuertes elektromagnetisches Ventil, einen ersten, mit wenigstens einem Druckluftvorrat in Verbindung stehenden Vorratsanschluss, eine erste Entlüftung sowie einen ersten Arbeitsausgang aufweist und welche als Zustände wenigstens den Zustand "Fahren" und den Zustand "Parken" einnehmen kann, wobei der erste Arbeitsausgang in dem Zustand "Fahren" von dem Druckluftbehälter belüftet und in dem Zustand "Parken" entlüftet ist, eine Ventileinrichtung, welche wenigstens ein von der elektronischen Steuereinrichtung gesteuertes elektromagnetisches Ventil, einen zweiten, mit dem wenigstens einen Druckluftvorrat in Verbindung stehenden Vorratsanschluss, eine zweite Entlüftung sowie einen zweiten Arbeitsausgang aufweist. Die elektro-pneumatische Parkbremssteuereinrichtung ist bistabil ausgebildet und weist wenigstens den Zustand "Fahren" und den Zustand "Parken" als stabile Zustände auf, eine Sensoreinrichtung vorgesehen ist, welche den Bewegungszustand des Fahrzeugs und den gerade vorliegenden stabilen Zustand der elektro-pneumatischen Parkbremssteuereinrichtung erfasst und ein den gerade vorliegenden Bewegungszustand des Fahrzeugs repräsentierendes Bewegungssignal und ein den gerade vorliegenden stabilen Zustand der elektro-pneumatischen Parkbremssteuereinrichtung repräsentierendes Zustandssignal in die elektronische Steuereinrichtung einsteuert.

Die Aufgabe der vorliegenden Erfindung ist es daher, ein Verfahren zum Prüfen solcher Wechselventile anzugeben, mit dem eine einfache, kostengünstige und sichere Prüfung der Wechselventile, auch während des Betriebs des Fahrzeugs, möglich ist.

Die Erfindung löst die Aufgabe in einem ersten Aspekt bei einem Verfahren der eingangs genannten Art mit den Schritten: a) Aussteuern eines ersten Drucks an dem ersten Wechselventilanschluss; b) Ermitteln eines für den ersten Druck indikativen Werts am ersten Wechselventilanschluss; und c) Vergleichen des für den ersten Druck indikativen Werts mit einem ersten hierfür vorgesehenen vorbestimmten Vergleichswert, und bei einer Abweichung, die größer ist als eine erste Toleranz: Ermitteln und/oder Ausgeben eines Fehlers des Wechselventils.

Die Erfindung beruht auf der Idee, über den Vergleich eines Werts, der für den am ersten Wechselventilanschluss anliegenden Druck beim Be- und Entlüften indikative ist, die fehlerfreie Funktion eines Select-High-Ventils sicherzustellen. Das heißt, während der erste Druck am ersten Wechselventilanschluss ausgesteuert wird, wird der für diesen Druck indikative Wert ermittelt und dann mit einem entsprechenden Vergleichswert verglichen, um die Funktionsfähigkeit des Wechselventils zu prüfen. Dies kann sowohl durch eine erweiterte Testaktivierung, zum Beispiel im Rahmen einer erweiterten Abfahrkontrolle geschehen, als auch im laufenden Betrieb, bzw. bei aktiver Druckaussteuerung.

Vorzugsweise wird, wenn in Schritt a) ein erster Druck an dem ersten Wechselventilanschluss ausgesteuert wird, der zweite Wechselventilanschluss nicht mit einem Druck beaufschlagt, sondern vorzugsweise entlüftet. Es gibt jedoch auch Ausführungsformen, die später noch beschrieben werden, in denen eine parallele Druckaussteuerung erfolgt. Wenn an dem ersten Wechselventilanschluss der erste Druck ausgesteuert wird, während an dem zweiten Wechselventilanschluss Umgebungsdruck anliegt, sollte das Wechselventil so reagieren, dass der erste Druck an dem dritten Wechselventilanschluss bereitgestellt wird. Ein Fehler, der typischerweise bei Wechselventilen auftreten kann, ist einerseits eine Leckage, die zum Beispiel bei einem Verklemmen einer Ventilkugel erfolgt, oder einer unrichtigen Positionierung von Ventilelementen oder dergleichen. Leckagen können zwischen dem ersten und dritten Wechselventilanschluss, dem zweiten und dritten Wechselventilanschluss oder auch dem ersten und zweiten Wechselventilanschluss vorliegen. Alle diese Fehler sollen durch das Verfahren erkannt werden.

Grundsätzlich ist es möglich und bevorzugt, dass zum Aussteuern des ersten, zweiten und weiterer Drücke an den ersten und zweiten Wechselventilanschlüssen diese von einem Umgebungsdruck ausgehend belüftet werden, von einem anderen Druck ausgehend belüftet werden, oder von einem höherliegenden Druck entlüftet werden, um den ersten bzw. zweiten oder weiteren Druck zu erreichen. Beispielsweise kann es vorkommen, dass im Betrieb zunächst ein Maximaldruck ausgesteuert ist und dann, um den entsprechenden ersten, zweiten oder weiteren Druck auszusteuern, von dem Maximaldruck auf den ersten, zweiten oder weiteren Druck entlüftet wird. Auch auf diese Weise lässt sich ein entsprechender Druck an dem ersten oder zweiten Wechselventilanschluss bereitstellen.

Ein für den ersten Druck indikativer Wert kann beispielsweise ein zu einem bestimmten Zeitpunkt gemessener Druck, bspw. in MPa, sein oder ein Druckverlauf über eine bestimmte Zeitdauer, bspw. in MPa über die Zeit aufgetragen. Besonders bevorzugt sind erste zeitliche Ableitungen derartiger Werte, also ein Druckgradient zu einem bestimmten Zeitpunkt, ein Druckgradient in einem bestimmten Zeitraum oder ein Druckgradientenverlauf über eine bestimmte Zeitdauer. Insbesondere Gradientenwerte sind bevorzugt, da sie die zeitliche Änderung des ersten Drucks angeben, aus der auf bevorzugte Weise das Schalten des Wechselventils und die Schaltcharakteristik ermittelt werden kann. Nachdem nun in den Schritten a) bis c) der erste Wechselventilanschluss getestet wurde, wird erfindungsgemäß in weiteren Schritten d) bis f) der zweite Wechselventilanschluss getestet. Hierzu wird vorzugsweise in einem Schritt d) ein zweiter Druck an dem zweiten Wechselventilanschluss ausgesteuert; in Schritt e) ein für den zweiten Druck indikativer Wert am zweiten Wechselventilanschluss ermittelt; und in Schritt f) der für den zweiten Druck indikative Wert mit einem zweiten hierfür vorgesehenen vorbestimmten Vergleichswert verglichen und bei einer Abweichung, die größer ist als eine zweite Toleranz, wird ein Fehler ermittelt und/oder ausgegeben. Während diesen Schritten ist der erste Wechselventilanschluss vorzugsweise auf Umgebungsdruck entlüftet. Das heißt, nachdem der erste Wechselventilanschluss getestet wurde, wird dieser vorzugsweise auf Umgebungsdruck entlüftet, bevor der zweite Wechselventilanschluss mit dem zweiten Druck beaufschlagt wird. Im Grunde gelten für die Prüfung des zweiten Wechselventilanschlusses dieselben Ausführungen, wie oben mit Bezug auf den ersten Wechselventilanschluss beschrieben, sodass auf diese Ausführungen Bezug genommen wird.

In einer bevorzugten Weiterbildung umfasst das Verfahren den Schritt: g) Vergleichen einer Differenz aus dem für den ersten Druck indikativen Wert und dem für den zweiten Druck indikativen Wert mit einem vorbestimmten ersten Schwellwert; und bei Unterschreiten des ersten Schwellwerts: Ermitteln und/oder Ausgeben eines Fehlers des Wechselventils. Typischerweise sollten Wechselventile symmetrisch agieren, sodass bei bekannten ersten oder zweiten Drücken, die vorzugsweise identisch sind, auch die Differenz der jeweiligen für die ersten und zweiten Drücke indikativen Werte bekannt ist. Wird hier ein vorbestimmter erster Schwellwert unterschritten bzw. überschreitet ein Betrag der Differenz den ersten vorgestellten Schwellwert, wird vorzugsweise wiederum ein Fehler ermittelt und/oder ausgegeben. Ein Über- bzw. Unterschreiten des ersten Schwellwerts kann darin begründet liegen, dass eine Ventilkugel des Wechselventils einseitig verklemmt ist und so stark verschiedene für die ersten und zweiten Drücke indikativen Werte auftreten.

Die vorherigen Ausführungen beziehen sich vorzugsweise auf ein sogenanntes "sequenzielles" Aussteuern von ersten und zweiten Drücken, bei denen die ersten und zweiten Drücke nacheinander ausgesteuert werden, während der jeweils andere des ersten und zweiten Wechselventilanschlusses, entlüftet ist. In einer bevorzugten Weiterbildung wird allerdings eine parallele Aussteuerung vorgenommen. Hierbei ist bevorzugt, dass in Schritt d), wie oben beschrieben, der zweite Druck am zweiten Wechselventilanschluss ausgesteuert wird, während der erste Druck am ersten Wechselventilanschluss bereits ausgesteuert ist. Das heißt, in diesem Fall wird zunächst der erste Druck am ersten Wechselventilanschluss ausgesteuert und aufrechterhalten und dann, nach Verstreichen einer vorbestimmten Zeitperiode, der zweite Druck am zweiten Wechselventilanschluss ausgesteuert. Für den Fall, dass der erste und der zweite Druck dieselbe Höhe haben und das Wechselventil symmetrisch ausgebildet ist, sollte sich an dem ermittelten für den ersten oder zweiten Druck indikativen Wert nichts ändern. Nach wie vor wird der erste Druck durchgesteuert und das Wechselventil schlägt nicht um, wenn der zweite Druck ausgesteuert wird, auch wenn dieser dieselbe Höhe hat. Eine Abweichung von diesem erwarteten für den ersten oder zweiten Druck indikativen Wert kann wiederum einen Defekt des Wechselventils anzeigen, sodass ein Fehler ermittelt wird und/oder ausgegeben wird.

Besonders bevorzugt ist der für den ersten Druck indikative Wert ein Druckgradient. Der erste vorbestimmte Vergleichswert ist in diesem Fall ein erster Vergleichs-Druckgradient ist. Auch der für den zweiten Druck indikative Wert ist vorzugsweise ein Druckgradient, nämlich ein zweiter Druckgradient. Der zweite vorbestimmte Vergleichswert ist in diesem Fall ein zweiter Vergleichs-Druckgradient. Bevorzugt können auch jeweils mehrere Druckgradienten in einem bestimmten Zeitraum erfasst werden und so ein Druckgradientenverlauf erhalten werden. Demnach ist in einer bevorzugten Ausführungsform der für den ersten Druck indikative Wert ein Druckgradientenverlauf und der erste vorbestimmte Vergleichswert ist ein erster Soll-Verlauf. Auch der für den zweiten Druck indikative Wert ist vorzugsweise ein Druckgradientenverlauf und der zweite vorbestimmte Vergleichswert ist ein zweiter Soll-Verlauf. Identische Ausführungen können auch für dritte, vierte usw. Drücke und entsprechende für diese Drücke indikative Werte gelten.

Der Soll-Verlauf bezieht sich dann auf eine zeitliche Änderung des Druckgradienten, vorzugsweise von der Aussteuerung des ersten Drucks an dem ersten Wechselventilanschluss ausgehend. Ist hier eine Abweichung größer als eine erste vorbestimmte Toleranz, wird ein Fehler ermittelt, oder auch ausgegeben. Das Ausgeben des Fehlers kann vorzugsweise an einen Fahrer geschehen, oder auch nur intern in einer Steuereinheit, um das Fahrzeug in einen sicheren Zustand zu überführen.

Grundsätzlich können die ersten und zweiten Drücke oder andere Drücke auch verschiedene Höhen haben. Insofern ist bevorzugt, dass das Verfahren die Schritte umfasst: Aussteuern eines dritten Drucks, der geringer ist als ein Maximaldruck, an dem zweiten Wechselventilanschluss; Aussteuern eines vierten Drucks an dem ersten Wechselventilanschluss, wobei der vierte Druck höher ist als der dritte Druck; Ermitteln eines Druckgradientenverlaufs über die Zeit am ersten Wechselventilanschluss; und Ermitteln einer Abweichung des ermittelten Druckgradientenverlaufs von einem vorbestimmten Sollverlauf; und bei Feststellen einer Abweichung: Ermitteln und/oder Ausgeben eines Fehlers des Wechselventils. Wenn zunächst der dritte Druck ausgesteuert wird, während der erste Wechselventilanschluss entlüftet ist und dann der vierte Druck ausgesteuert wird, während der dritte Druck noch ausgesteuert ist, sollte das Wechselventil umschlagen und den ersten mit dem dritten Wechselventilanschluss verbinden. Dies, weil der vierte Druck höher ist als der dritte Druck. Im Grunde kann der vierte Druck auch dem ersten Druck entsprechen. Das Umschlagen des Wechselventils, wenn der vierte Druck den dritten Druck übersteigt, ergibt eine charakteristische Kennlinie, die dem Sollverlauf entspricht. Wenn das Wechselventil einen Fehler hat, weicht die tatsächlich gemessene Kennlinie von diesem Sollverlauf ab, sodass wiederum ein Fehler ermittelt und/oder ausgegeben werden kann.

Es soll verstanden werden, dass dieser Aspekt auch unabhängig von dem ersten beschriebenen Aspekt ausgeführt werden kann. Das heißt, es ist nicht zwangsläufig notwendig, dass zunächst die Schritte a) bis f) wie oben beschrieben durchgeführt werden, vielmehr ist es auch bevorzugt, unmittelbar zunächst den dritten Druck auszusteuern, dann den vierten Druck auszusteuern und so eine Kennlinie zu erhalten, die mit einer Sollkennlinie verglichen wird.

**In** einer weiteren bevorzugten Ausführungsform umfasst das Verfahren die Schritte: Aussteuern eines fünften Drucks an dem ersten Wechselventilanschluss; Aussteuern eines sechsten Drucks am zweiten Wechselventilanschluss, während der fünfte Druck ausgesteuert ist, wobei der sechste Druck ein sehr geringer Druck ist; Erfassen eines am zweiten Wechselventilanschluss anliegenden Drucks über die Zeit; und bei Ansteigen des am zweiten Wechselventilanschluss anliegenden Drucks: Ermitteln und/oder Ausgeben eines Fehlers des Wechselventils. Es kann auch vorgesehen sein, dass der sechste Druck zuerst ausgesteuert wird und anschließend der fünfte Druck, oder, dass beide Drücke gleichzeitig ausgesteuert werden. Der sechste Druck ist ein sehr geringer Druck, vorzugsweise ein Kleinstdruck, vorzugsweise der kleinstmögliche Druck, den das entsprechende System an dem zweiten Wechselventilanschluss bereitstellen kann. Beispielsweise ist die Höhe Drucks in einem Bereich von 0,01 MPa bis 0,05 MPa. Beim Erfassen des Anstiegs des am zweiten Wechselventilanschluss anliegenden Drucks, entweder in Form eines Druckwerts gemessen in MPa oder in Form des Gradienten, gemessen in MPa/s, wird vorzugsweise wiederum ein Schwellwert genutzt, der einen gewissen Toleranzbereich berücksichtigt. Steigt der Druck am zweiten Wechselventilanschluss über die Zeit an, kann dies ein Indiz dafür sein, dass Luft vom ersten Wechselventilanschluss zum zweiten Wechselventilanschluss überströmt. Dies sollte üblicherweise bei Wechselventilen verhindert sein und der Druck vom ersten Wechselventilanschluss sollte in der vorliegenden Ausführungsform nur am dritten Wechselventilanschluss bereitgestellt werden, während vom zweiten Wechselventilanschluss aus kein Druck zum ersten oder zum dritten Wechselventilanschluss ausgesteuert wird.

Da es jedoch grundsätzlich auch denkbar ist, dass das den sechsten Druck am zweiten Wechselventilanschluss aussteuernde Modul eine Leckage hat, und aufgrund dieser Leckage der Druck am zweiten Wechselventilanschluss über die Zeit ansteigt, umfasst das Verfahren vorzugsweise die folgenden Schritte: Entlüften des ersten Wechselventilanschlusses vom fünften Druck auf Umgebungsdruck und Aussteuern des sechsten Drucks am zweiten Wechselventilanschluss; Erfassen des am zweiten Wechselventilanschluss anliegenden Drucks über die Zeit; und wenn der am zweiten Wechselventilanschluss anliegende Druck innerhalb eines vorbestimmten Toleranzbereichs bleibt: Ermitteln und/oder Ausgeben eines Fehlers des Wechselventils. Diese Schritte werden im Anschluss an die oben beschriebenen Schritte ausgeführt. Wenn der Druck am zweiten Wechselventilanschluss ansteigt, während der fünfte Druck ausgesteuert ist, aber nicht ansteigt, wenn kein Druck am ersten Wechselventilanschluss ausgesteuert ist, ist dies ein Indiz dafür, dass gerade nicht das an dem zweiten Wechselventilanschluss angeschlossene Modul eine Leckage hat, sondern Luft vom ersten zum zweiten Wechselventilanschluss überströmt. In genau diesem Fall soll dann der Fehler ermittelt bzw. ausgegeben werden. Der Druck kann wiederum als Druckwert oder Druckverlauf, gemessen z.B. in MPa, oder als Ableitung nach der Zeit von diesem, also als Druckgradient oder Druckgradientenverlauf, gemessen z.B. in MPa/s, ermittelt werden.

In einer bevorzugten Weiterbildung ist ferner vorgesehen, dass das Verfahren den Schritt umfasst: Ermitteln des aktuellen Vorratsdrucks; wobei wenigstens der oben beschriebene Schritt c) unter Berücksichtigung des ermittelten aktuellen Vorratsdrucks ausgeführt wird. Je nach Höhe des Vorratsdrucks können Gradienten oder Gradientenverläufe unterschiedlich ausfallen, sodass dieser bevorzugt berücksichtigt wird. Dasselbe gilt auch für den oben beschriebenen Schritt f). Ein höherer Vorratsdruck kann zu einem proportional höheren Druckgradienten führen, sodass durch Berücksichtigung des Vorratsdrucks, die ermittelten Druckgradienten und Druckgradientenverläufe normalisiert werden können.

Vorzugsweise ist der vorbestimmte Vergleichswert, mit dem der für den ersten Druck indikative Wertverglichen wird, ein basierend auf zuvor gemessenen Werten gelernter Wert. Vorzugsweise wird der für den ersten Druck indikative Wert und werden auch die übrigen Werte, wie der für den zweiten Druck indikative Wert, während des Normalbetriebs des Fahrzeugs erfasst und gespeichert. Diese Werte werden als gelernte Werte bezeichnet. Wird dann ein Abweichen von diesen Werten festgestellt, ist dies ein Indiz dafür, dass das Wechselventil defekt ist. Die kann für alle für Druck indikativen Werte gelten wie insbesondere einzelne Druckwerte, Druckverläufe, Gradienten und Gradientenverläufe.

Auch ist es bevorzugt, dass der erste und der zweite Gradient sowie die ersten und zweiten Gradientenverläufe an den ersten und zweiten Wechselventilanschlüssen zueinander verglichen werden, um auf diese Weise einen Fehler zu erkennen. In einer weiteren bevorzugten Ausführungsform ist vorgesehen, dass wenigstens der erste vorbestimmte Vergleichswert aus einem internen Speichermedium und/oder drahtlos von einem Cloud-Dienst empfangen wird. Das Gleiche gilt vorzugsweise auch für die weiteren Werte, wie den zweiten vorbestimmten Vergleichswert, den vorbestimmten ersten Schwellwert und den vorbestimmten Sollverlauf sowie andere Vergleichswerte für einen ersten und zweiten Gradientenverlauf und weitere hierin verwendete Werte. Einerseits ist es denkbar, dass herstellerseitig solche Werte in einem internen Speicher vorgespeichert sind, und gegebenenfalls beim Service aktualisiert werden. Andererseits ist auch denkbar und bevorzugt, dass solche Werte über einen Cloud-Dienst bereitgestellt werden. Dies ermöglicht dann eine Aktualisierung auf einem Server und das entsprechende Bereitstellen dieser Werte über den Cloud-Dienst. Hier können auch weiteren Eigenschaften wie beispielsweise Lebensdauer, Betriebsstunden und dergleichen mitberücksichtigt werden.

Für die Verbindung mit einem Cloud-Dienst ist vorzugsweise eine entsprechende Schnittstelle vorgesehen, die drahtlos den oder die entsprechenden Werte empfängt. Hierzu kann ein Fahrzeug, auf dem das vorstehend beschriebene Verfahren ausgeführt wird, ein Funkmodul, wie beispielsweise ein LTE-Modul oder dergleichen, umfassen.

In einer weiteren bevorzugten Ausführungsform ist vorgesehen, dass an den ersten Wechselventilanschluss ein erstes Ventilmodul, vorzugsweise ein erster Achsmodulator, und an den zweiten Wechselventilanschluss ein zweites Ventilmodul, vorzugsweise ein zweiter Achsmodulator, angeschlossen ist, wobei das erste und zweite Ventilmodul mittelbar oder unmittelbar elektronisch miteinander kommunizieren, und wobei der dritte Wechselventilanschluss mit einem Verbraucher, vorzugsweise Bremsaktuator, verbunden ist. Vorzugsweise ist ein erster Achsmodulator für den Normalbetrieb und der zweite Achsmodulator für einen Redundanzbetrieb des Fahrzeugs vorgesehen. Die mittelbare oder unmittelbare Kommunikation zwischen den ersten und zweiten Achsmodulatoren dient dann dazu, sowohl Betriebssignale als auch Ausfallsignale, Fehlersignale und dergleichen zu übertragen. Eine mittelbare Kommunikation kann beispielsweise über ein zwischengeschaltetes weiteres Modul, den Fahrzeugbus oder dergleichen, erfolgen. Gerade in solchen Fällen ist die Funktionsfähigkeit des Wechselventils entscheidend, falls in einem Redundanzfall der zweite Achsmodulator übernehmen muss, um das Fahrzeug sicher zu bremsen.

Vorzugsweise werden die Schritte des Verfahrens während einer Bremsung eines Fahrzeugs ausgeführt, wobei der erste Druck ein erster Bremsdruck zum Bremsen des Fahrzeugs ist. Immer, wenn der erste Bremsdruck zum Bremsen des Fahrzeugs bereitgestellt wird, ist es bevorzugt, die Funktionsfähigkeit des Wechselventils nach den vorstehenden Schritten zu testen. In diesem Fall ist es nicht erforderlich, dass eine gesonderte Testroutine für das Fahrzeug umgesetzt oder durchgeführt wird, sodass insgesamt ein effizienter Testprozess durchgeführt werden kann.

Weiterhin ist bevorzugt, dass die Schritte des Verfahrens in einem Fahrzeugstillstand ausgeführt werden, wobei das Verfahren ferner den Schritt umfasst: Empfangen eines Abfahrkontroll-Signals zum Ausführen einer Abfahrkontrolle; und in Antwort auf den Empfang des Abfahrkontroll-Signals: wenigstens Ausführen der Schritte a) bis c). Gemäß dieser Ausführungsform wird das Verfahren, wenigstens die Schritte a) bis c), vorzugsweise weitere Schritte, im Rahmen einer erweiterten Abfahrkontrolle für das Fahrzeug durchgeführt. Hierdurch kann die Sicherheit des Fahrzeugs insgesamt erhöht werden.

**In** einem zweiten Aspekt löst die Erfindung die eingangs genannte Aufgabe mit einem pneumatischen System der eingangs genannten Art, wobei neben dem eingangs genannten Wechselventil ferner ein erstes Ventilmodul umfasst ist, das mit dem ersten Wechselventilanschluss verbunden ist, um an diesem einen ersten Druck auszusteuern und einen ersten Drucksensor umfasst, zum Erfassen eines für den ersten Druck indikativen Werts; und ferner ein zweites Ventilmodul vorgesehen ist, das mit dem zweiten Wechselventilanschluss verbunden ist, um an diesem einen zweiten Druck auszusteuern und einen zweiten Drucksensor zum Erfassen eines für den zweiten Druck indikativen Werts aufweist; sowie ferner eine elektronische Steuereinheit umfasst, die mit der ersten und zweiten Ventileinheit verbunden ist zum Empfangen von ersten und zweiten Drucksignalen der ersten und zweiten Drucksensoren, die die ersten und zweiten indikativen Werter repräsentieren, wobei die elektronische Steuereinheit ferner Mittel aufweist, die geeignet sind, die Schritte des Verfahrens gemäß dem ersten Aspekt der Erfindung auszuführen.

Es soll verstanden werden, dass das Verfahren gemäß dem ersten Aspekt der Erfindung sowie das pneumatische System gemäß dem zweiten Aspekt der Erfindung gleiche und ähnliche Unteraspekte aufweisen, wie sie insbesondere in den abhängigen Ansprüchen niedergelegt sind. Insofern wird für besondere Ausführungsformen und deren Vorteile sowie Merkmalskombinationen vollumfänglich auf die obige Beschreibung zum ersten Aspekt der Erfindung Bezug genommen.

Das pneumatische System ist vorzugsweise Teil eines elektronisch steuerbaren pneumatischen Bremssystems für ein Nutzfahrzeug, insbesondere ein Nutzfahrzeug von einem höheren Automatisierungslevel, insbesondere Level 3, 4 oder 5 gemäß SAE. Die Mittel, die geeignet sind, die Schritte des Verfahrens nach dem ersten Aspekt der Erfindung auszuführen, umfassen vorzugsweise einen Prozessor sowie einen Speicher, auf dem ein Softwarecode gespeichert ist.

**In** einer ersten bevorzugten Ausführungsform des pneumatischen Systems ist die erste Ventileinheit als ein erster Achsmodulator und die zweite Ventileinheit als ein zweiter Achsmodulator ausgebildet, wobei der dritte Wechselventilanschluss fluidleitend mit einem Bremsaktuator verbunden ist.

Ferner ist bevorzugt, dass der erste Achsmodulator für einen Normalbetrieb des Fahrzeugs ausgebildet und vorgesehen ist und der zweite Achsmodulator für einen Redundanzfall ausgebildet und vorgesehen ist, in welchem der erste Achsmodulator nicht oder nicht richtig arbeiten kann. Grund für den Ausfall des ersten Achsmodulators kann sein, dass ein übergeordnetes System ausgefallen ist, oder auch ein unmittelbarer Fehler innerhalb des ersten Achsmodulators auftritt.

Weiterhin ist bevorzugt, dass ein Pfad stromabwärts des dritten Wechselventilanschlusses, keinen weiteren Drucksensor aufweist. Der dritte Wechselventilanschluss ist vorzugsweise unmittelbar oder über eine kurze Verschlauchung oder Verrohrung mit dem Bremsaktuator verbunden. Die Prüfung gemäß dem Verfahren des ersten Aspekts der Erfindung wird vorzugsweise ausschließlich mit Sensoren in den ersten und zweiten Ventileinheiten umgesetzt. Insbesondere wird mit dem ersten Drucksensor der am ersten Wechselventilanschluss anliegende Druck und mit dem zweiten Drucksensor der am zweiten Wechselventilanschluss anliegende Druck erfasst. Hieraus lassen sich die entsprechenden für den ersten bzw. zweiten Druck indikativen Werte, wie beispielsweise Druckgradienten und Druckgradientenverläufe, bestimmen. Weitere Sensoren sind nicht erforderlich und im Rahmen der Erfindung auch nicht vorgesehen.

In einem dritten Aspekt wird die eingangs genannte Aufgabe gelöst durch ein Fahrzeug, vorzugsweise Nutzfahrzeug, mit einem pneumatischen System nach einem der vorstehend beschriebenen bevorzugten Ausführungsformen eines pneumatischen Systems gemäß dem zweiten Aspekt der Erfindung.

In einem vierten Aspekt wird die eingangs genannte Aufgabe gelöst durch ein Computerprogramm, umfassend Befehle, die bewirken, dass das pneumatische System nach einer der vorstehend beschriebenen bevorzugten Ausführungsformen eines pneumatischen Systems gemäß dem zweiten Aspekt der Erfindung die Verfahrensschritte nach einer der vorstehend beschriebenen bevorzugten Ausführungsformen des Verfahrens gemäß dem ersten Aspekt der Erfindung ausführt.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne den durch die Ansprüche definierten Gegenstand der Erfindung zu verlassen.

Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: ein pneumatisches System nach einer ersten Ausführungsform;
- Fig. 2: ein pneumatisches System nach einem zweiten Ausführungsbeispiel;
- Fig. 3: ein Fahrzeug mit einem Bremssystem.
- Fig. 4: ein Diagramm mit Druckgradienten;
- Fig. 5: ein zweites Diagramm mit Druckgradienten; und in
- Fig. 6: einen schematischen Ablauf des Verfahrens.

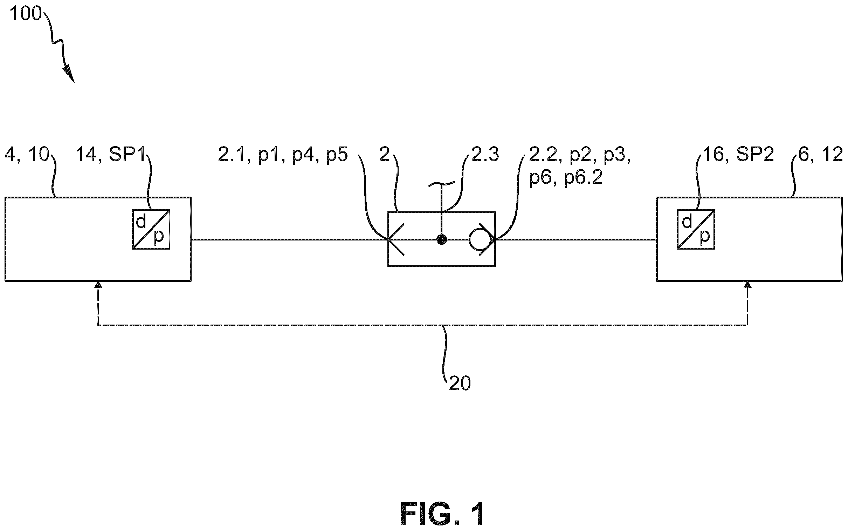

Ein pneumatisches System 100 nach einem ersten Ausführungsbeispiel (Fig. 1) weist ein Wechselventil 2 auf, welches nach herkömmlicher Art und Weise ausgebildet ist. Das Wechselventil 2 weist einen ersten Wechselventilanschluss 2.1, einen zweiten Wechselventilanschluss 2.2 und einen dritten Wechselventilanschluss 2.3 auf. Das Wechselventil 2 ist so ausgebildet, dass der jeweils höhere des am ersten und zweiten Wechselventilanschluss 2.1, 2.2 anliegende Druck an den dritten Wechselventilanschluss 2.3 ausgesteuert wird. Das Wechselventil 2 wird demnach auch als "Select-High-Ventil" bezeichnet. Solche Select-High-Ventile werden in elektropneumatischen Bremssystemen vielfältig eingesetzt und bilden Standardbauteile.

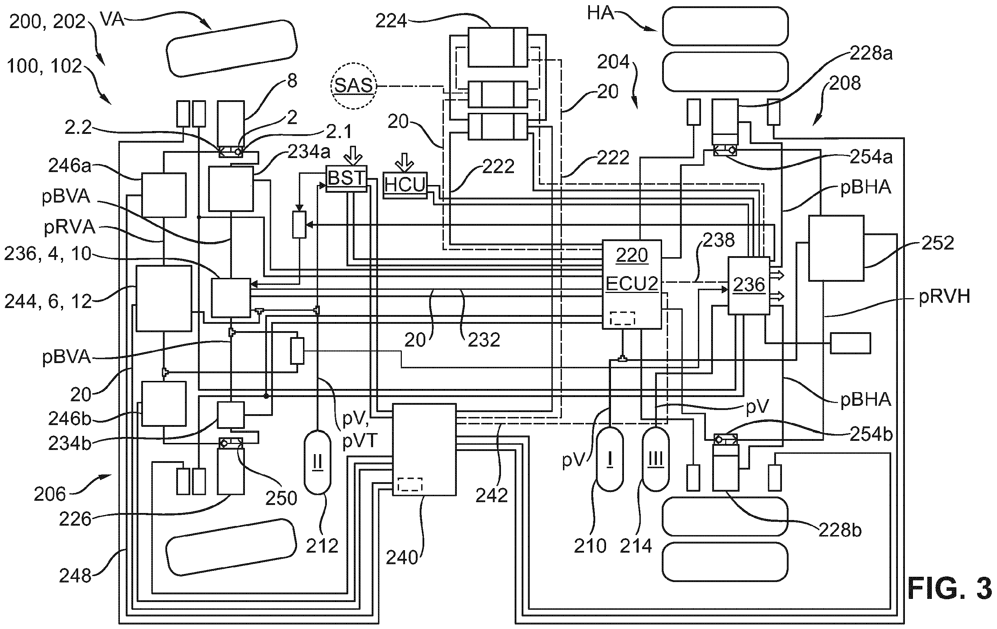

Nach der in Fig. 1 gezeigten Ausführungsform ist der erste Wechselventilanschluss 2.1 mit einem ersten Ventilmodul 4 und der zweite Wechselventilanschluss 2.2 ist mit einem zweiten Ventilmodul 6 verbunden. Der dritte Wechselventilanschluss 2.3 kann mit einem Verbraucher verbunden sein, wie insbesondere einem Bremsaktuator 8 (vgl. Fig. 3). Aber auch andere Verbraucher können an den dritten Wechselventilanschluss 2.3 angeschlossen werden, wie beispielsweise (nicht gezeigt) Modulatoren, Federspeicher, Bremszylinder, Anhängersteuerventile, und dergleichen.

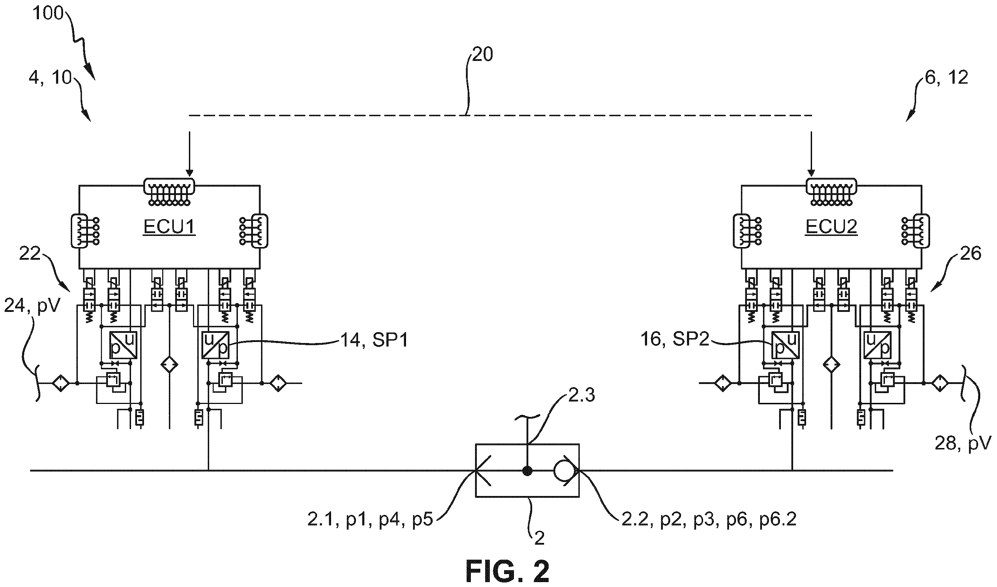

Die ersten und zweiten Ventilmodule 4, 6 können bevorzugt, wie dies im zweiten Ausführungsbeispiel gemäß Fig. 2 gezeigt ist, als erste und zweite Achsmodulatoren 10, 12 ausgebildet sein. Dies wird im Weiteren noch genauer beschrieben werden.

Das erste Ventilmodul 4 dient dazu, wenigstens einen ersten Druck p1 an den ersten Wechselventilanschluss 2.1 auszusteuern. Das erste Ventilmodul 4 kann darüber hinaus weitere Drücke, wie nachfolgend noch genauer beschrieben werden wird, an den ersten Wechselventilanschluss 2.1 aussteuern. Zum Erfassen, des an den ersten Wechselventilanschluss 2.1 ausgesteuerten Drucks umfasst das erste Ventilmodul 4 einen ersten Drucksensor 14, der ein erstes Drucksignal SP1 bereitstellt. In übereinstimmender Weise ist das zweite Ventilmodul 6 dazu ausgebildet, wenigstens einen zweiten Druck p2 an dem zweiten Wechselventilanschluss 2.2 auszusteuern. Das zweite Ventilmodul 6 kann darüber hinaus weitere Drücke an dem zweiten Wechselventilanschluss 2.2 aussteuern, wie nachfolgend noch genau beschrieben werden wird. Das zweite Ventilmodul 6 umfasst einen zweiten Drucksensor 16, der dazu vorgesehen ist, den am zweiten Wechselventilanschluss 2.2 ausgesteuerten Druck zu erfassen und ein entsprechendes zweites Drucksignal SP2 bereitzustellen.

Wie sich weiterhin aus Fig. 1 ergibt, können das erste und zweite Ventilmodul 4 miteinander kommunizieren. Dazu ist zwischen diesen eine Signalleitung 20 eingezeichnet. Die Signalleitung 20 ist hier nur illustrativ und soll verdeutlichen, dass das erste und zweite Ventilmodul 4, 6 mittelbar oder unmittelbar miteinander kommunizieren können. Die Signalleitung 20 kann beispielsweise durch eine direkte Verkabelung zwischen den ersten und zweiten Ventilmodulen 4, 6 ausgebildet sein, als Fahrzeugbus, der noch weitere Module, die hier nicht gezeigt sind, miteinander verbindet, oder auch als mittelbare Verbindung über ein weiteres Modul (ebenfalls nicht gezeigt). Die Signalleitung 20 kann aber auch durch mehrere Signalleitungen gebildet sein. Auch die ersten und zweiten Drucksignale SP1, SP2 werden vorzugsweise über die Signalleitung 20 bereitgestellt.

In einer ersten praktischen Ausgestaltung, wie sie in der Fig. 2 gezeigt ist, ist das erste Ventilmodul 4 durch einen ersten Achsmodulator 10 und das zweite Ventilmodul 6 durch einen zweiten Achsmodulator 12 gebildet. Der erste Achsmodulator 10 weist in diesem Ausführungsbeispiel (Fig. 2) eine eigene Intelligenz in Form einer ersten elektronischen Steuereinheit ECU1 auf. Das zweite Ventilmodul 6, das hier als zweiter Achsmodulator 12 ausgebildet ist, weist ebenso eine eigene Intelligenz auf, hier in Form einer zweiten elektronischen Steuereinheit ECU2.

Neben der ersten elektronischen Steuereinheit ECU1 und dem ersten Drucksensor 14 weist das erste Ventilmodul 4 eine erste Ventilanordnung 22 auf, die hier nicht im Detail beschrieben wird, aber dazu dient, von einem Vorratsanschluss 24 des ersten Ventilmoduls 4 Vorratsdruck pV zu empfangen, und diesen als beispielsweise ersten Druck p1 an dem ersten Wechselventilanschluss 2.1 bereitzustellen. Dies geschieht in Abhängigkeit von der Schaltung von einem oder mehreren Schaltventilen innerhalb der ersten Ventilanordnung 22. Grundsätzlich ist der Aufbau von Achsmodulatoren bekannt, sodass hier nicht weiter auf den genauen Aufbau eingegangen werden muss. Das zweite Ventilmodul 6, welches hier als zweiter Achsmodulator 12 ausgebildet ist, ist entsprechend aufgebaut und weist eine zweite Ventilanordnung 26 auf, die über einen zweiten Vorratsanschluss 28 Vorratsdruck pV empfängt. In Abhängigkeit von der Schaltstellung der ein oder mehreren Schaltventile der zweiten Ventilanordnung 26, wird wenigstens der zweite Druck p2 an dem zweiten Wechselventilanschluss 2.2 ausgesteuert. Der Vorratsdruck pV kann von einem oder auch von zwei unterschiedlichen Druckluftvorräten bereitgestellt werden, wie dies in Bezug auf Fig.3 näher erläutert werden wird. In dem in Fig. 2 gezeigten Ausführungsbeispiel ist der erste Drucksensor 14 mit der ersten elektronischen Steuereinheit ECU1 verbunden und stellt das erste Drucksignal SP1 an dieser bereit. Die erste elektronische Steuereinheit ECU1 ist dann mit der Signalleitung 20 verbunden, und ist in der Lage, das erste Drucksignal SP1 über diese an weiteren Einheiten, wie insbesondere dem zweiten Ventilmodul 6, bereitzustellen. Es kann aber auch vorgesehen sein, dass die erste elektronische Steuereinheit ECU1 ein von dem ersten Drucksignal SP1 abgeleitetes Signal über die Signalleitung 20 bereitstellt. In übereinstimmender Weise ist auch der zweite Drucksensor 16 des zweiten Ventilmoduls 6 mit der zweiten elektronischen Steuereinheit ECU2 verbunden und stellt an dieser das zweite Drucksignal SP2 bereit. Die zweite elektronische Steuereinheit ECU2 ist dann ihrerseits mit der Signalleitung 20 verbunden, und ist in der Lage, das zweite Drucksignal SP2 an dieser bereitzustellen. Ebenso kann vorgesehen sein, dass die zweite elektronische Steuereinheit ECU2 von dem zweiten Drucksignal SP2 abgeleitete Signale über die Signalleitung 20 bereitstellt.

In einer Einbausituation in einem Bremssystem 102 ist das pneumatische System 100 in Fig. 3 gezeigt. Fig. 3 illustriert genauer gesagt ein Fahrzeug 200, nämlich ein Nutzfahrzeug 202, das ein solches elektronisch steuerbares pneumatisches Bremssystem 102 mit dem vorstehend beschriebenen pneumatischen System 100 umfasst. Das Fahrzeug 200 hat eine Vorderachse VA und eine Hinterachse HA, kann aber darüber hinaus auch weitere Hinterachsen umfassen. Das Bremssystem 102 hat einen Hinterachsbremskreis 204, einen Vorderachsbremskreis 206 und einen Parkbremskreis 208. Der Hinterachsbremskreis 204 wird von einem ersten Druckluftvorrat 210, der Vorderachsbremskreis 206 von einem zweiten Druckluftvorrat 212 und der Parkbremskreis 208 von einem dritten Druckluftvorrat 214 gespeist. Alle drei Druckluftvorräte 210, 212, 214 stellen eine Vorratsdruck pV bereit.

Zum Steuern des Bremssystems 102 ist eine Zentraleinheit 220 vorgesehen, die über eine zentrale elektronische Steuereinheit ECUZ verfügt. Diese Zentraleinheit 220 ist über einen Fahrzeugbus 222 mit einer Einheit für autonomes Fahren 224 verbunden, um von dieser Steuersignale, Bremsanforderungssignale oder dergleichen zu erhalten. Der Fahrzeugbus 222 bildet auch einen Teil der Signalleitung 20.

An der Vorderachse VA umfasst das Bremssystem 102 einen Bremsaktuator 8, der hier an dem rechten Vorderrad der Vorderachse VA vorgesehen ist. An dem linken Vorderrad der Vorderachse VA umfasst das Bremssystem 102 einen weiteren Bremsaktuator 226 sowie an der Hinterachse HA Hinterachsbremsaktuatoren 228a, 228b. An der Vorderachse VA umfasst das Bremssystem 102 ferner einen Vorderachsmodulator 230, der hier in Form des ersten Achsmodulators 10, bzw. in Form des ersten Ventilmoduls 4, vorgesehen ist. Der Vorderachsmodulator 230 ist über eine Vorderachsbremssignalleitung 232 mit der Zentraleinheit 220 verbunden und empfängt von dieser Schaltsignale. Ferner ist der Vorderachsmodulator 230 mit dem zweiten Druckluftvorrat 212 verbunden und empfängt von diesem Vorratsdruck pV. Der Vorderachsmodulator 230 ist dazu ausgelegt, in Abhängigkeit von über die Vorderachsbremssignalleitung 232, die wiederum einen Teil der Signalleitung 20 bildet, empfangenen Signale einen Vorderachsbremsdruck pBVA auszusteuern. Dies erfolgt in grundsätzlich bekannter Weise. Der Vorderachsbremsdruck pBVA wird dann dem Bremsaktuator 8 und dem weiteren Bremsaktuator 226 bereitgestellt, hier über erste und zweite ABS-Ventile 234a, 234b, um eine radgerechte Bremsung zu erreichen.

In ähnlicher Weise ist an der Hinterachse HA ein Hinterachsmodulator 236 vorgesehen, der mit dem ersten Druckluftvorrat 210 und über eine Hinterachsbremssignalleitung 238 mit der Zentraleinheit 220 verbunden ist. Der Hinterachsmodulator 236 steuert einen Hinterachsbremsdruck pBHA an den Hinterachsbremsaktuatoren 228a, 228b aus.

Für den Fall, dass ein Fehler in dem Bremssystem 202 auftritt, beispielsweise in einer Einheit für autonomes Fahren 224, der Zentraleinheit 20 oder in einem des Vorderachsmodulators 230 und des Hinterachsmodulators 236, umfasst das Bremssystem 202 eine redundante Steuereinheit 240, die ebenfalls über den Fahrzeugbus 222 mit der Einheit für autonomes Fahren 224 sowie über eine interne Signalleitung 242 mit der Zentraleinheit 220 verbunden ist. Die redundante Zentraleinheit 240 ist dazu vorgesehen, im Fehlerfall die Steuerung des Bremssystems 202 zu übernehmen.

Neben der redundanten Zentraleinheit 240 umfasst das Bremssystem 202 auch einen redundanten Vorderachsmodulator 244, hier in Form des zweiten Achsmodulators 12, bzw. des zweiten Ventilmoduls 6. Der redundante Vorderachsmodulator 244 ist über redundante Vorderachs-ABS-Ventile 246a, 246b ebenfalls mit dem Bremsaktuator 8, bzw. dem weiteren Bremsaktuator 226 verbunden. Im Fehlerfall steuert die redundante Zentraleinheit 240 den redundanten Vorderachsmodulator 244, um so redundant den Vorderachsbremsdruck pBVA auszusteuern. Dazu ist auch der redundante Vorderachsmodulator 244 mit dem zweiten Druckluftvorrat 2 verbunden, sowie über eine redundante Vorderachsbremssignalleitung 248 mit der redundanten Zentraleinheit 240. Auch die redundante Vorderachsbremssignalleitung 248 bildet einen Teil der Signalleitung 20. Auf diese Weise ist der redundante Vorderachsmodulator 244 über die redundante Vorderachsbremssignalleitung 248, die redundante Zentraleinheit 40, die Zentraleinheit 220 und die Vorderachsbremssignalleitung 232 mit dem Vorderachsmodulator 230 verbunden, um so Signale auszutauschen und mit dieser kommunizieren zu können.

Zwischen die ABS-Ventile 234a, 234b, bzw. redundanten Vorderachs-ABS-Ventile 246a, 246b und den Bremsaktuator 8, bzw. den weiteren Bremsaktuator 226, ist das Wechselventil 2 bzw. ein weiteres Wechselventil 250 geschaltet. Im Folgenden wird vor allem das Wechselventil 2 beschrieben, wobei verstanden werden soll, dass das Wechselventil 250 ebenso aufgebaut ist und ebenso funktioniert. Genauer gesagt, ist das rechte ABS-Ventil 234a mit dem ersten Wechselventilanschluss 2.1 und das rechte redundante Vorderachs-ABS-Ventil 246a mit dem zweiten Wechselventilanschluss 2.2 verbunden. Der dritte Wechselventilanschluss 2.3 ist hier unmittelbar mit der Bremskammer des Bremsaktuators 8 verbunden.

Eine ebensolche Schaltung ist auch für den weiteren Bremsaktuator 226 vorgesehen. Für den Hinterachsbremskreis 204 ist ein redundanter Hinterachsmodulator 252 vorgesehen, der im Fehlerfall den Hinterachsmodulator 236 ersetzen kann. Auch dieser ist über erste und zweite Hinterachswechselventile 254a, 254b mit den Hinterachsbremsaktuatoren 228a, 228b verbunden, wie dies grundsätzlich schon in Bezug auf die Vorderachse VA beschrieben wurde. Deshalb wird hier im Detail nicht mehr auf diese Verbindung eingegangen.

Insgesamt weist das Bremssystem 102 daher vier Wechselventile auf, nämlich das Wechselventil 2, das weitere Wechselventil 250 sowie die ersten und zweiten Hinterachswechselventile 254a, 254b. Grundsätzlich dienen diese dazu, im Normalbetrieb den Vorderachsbremsdruck pBVA, bzw. Hinterachsbremsdruck pBHA an die entsprechenden Bremsaktuatoren weiterzuleiten. Sollte im Fehlerfall die redundante Zentraleinheit 240 übernehmen müssen, wird der Vorderachsbremsdruck pBVA bzw. der Hinterachsbremsdruck pBHA dann über den redundanten Vorderachsmodulator 244, bzw. redundanten Hinterachsmodulator 252 ausgesteuert, und so über die entsprechenden Wechselventile an den entsprechenden Bremsaktuatoren bereitgestellt. Daher ist es wichtig, dass die Wechselventile alle korrekt funktionieren.

Zum Prüfen der Wechselventile 2, 250, 254a, 254b wird vorzugsweise im Stillstand oder während des Betriebs des Fahrzeugs 200 das erfindungsgemäße Fahren zum Prüfen eines Wechselventils ausgeführt. Das Prüfen des Wechselventils 2 kann sowohl im Rahmen einer erweiterten Abfahrkontrolle, vor Beginn einer Fahrt mit dem Fahrzeug 200 oder auch während des Betriebs des Fahrzeugs 200, beispielsweise beim Aussteuern des Vorderachsbremsdrucks pBVA und/oder des Hinterachsbremsdruck pBHA durchgeführt werden. Im Rahmen des Verfahrens werden vorzugsweise zunächst die folgenden Schritte ausgeführt: Aussteuern eines ersten Drucks p1 an dem ersten Wechselventilanschluss 2.1; Ermitteln eines für den ersten Druck p1 indikativen Werts am ersten Wechselventilanschluss 2.1; und Vergleichen des für den ersten Druck indikativen Werts mit einem ersten hierfür vorgesehenen vorbestimmten Vergleichswert. In einem Ausführungsbeispiel ist der für den ersten Druck indikative Wert einerseits als erster Druckgradienten G1, andererseits aber auch als Druckgradientenverlauf G1T am ersten Wechselventilanschluss 2.1 dargestellt.

Nach einem Vergleichen des ersten Druckgradienten G1 bzw. Druckgradientenverlaufs G1T mit einem ersten vorbestimmten Vergleichswert GV1 bzw. im Falle des Druckgradientenverlaufs G1T mit dem ersten Soll-Verlauf GS1, wird bei einer Abweichung, die größer als eine erste Toleranz T1 ist ein Fehler E des Wechselventils 2 ermittelt und/oder ausgegeben.

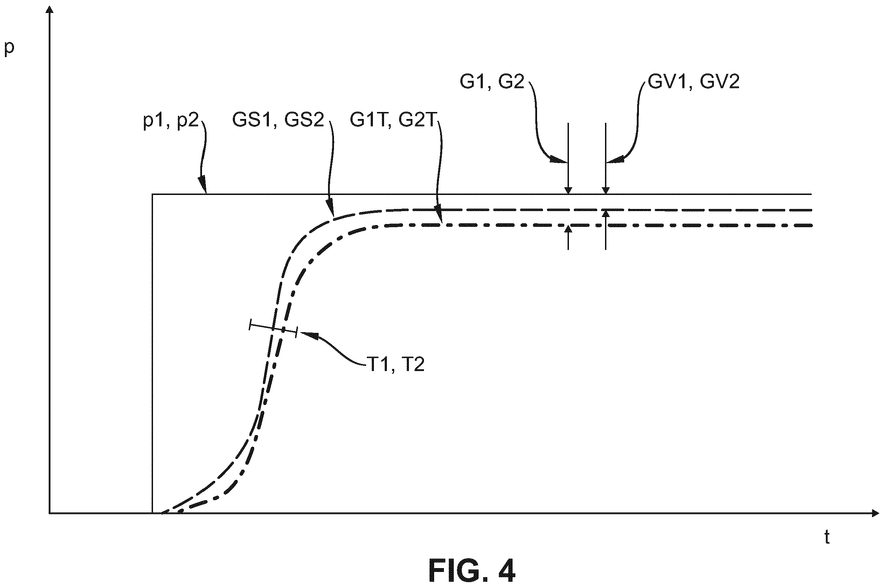

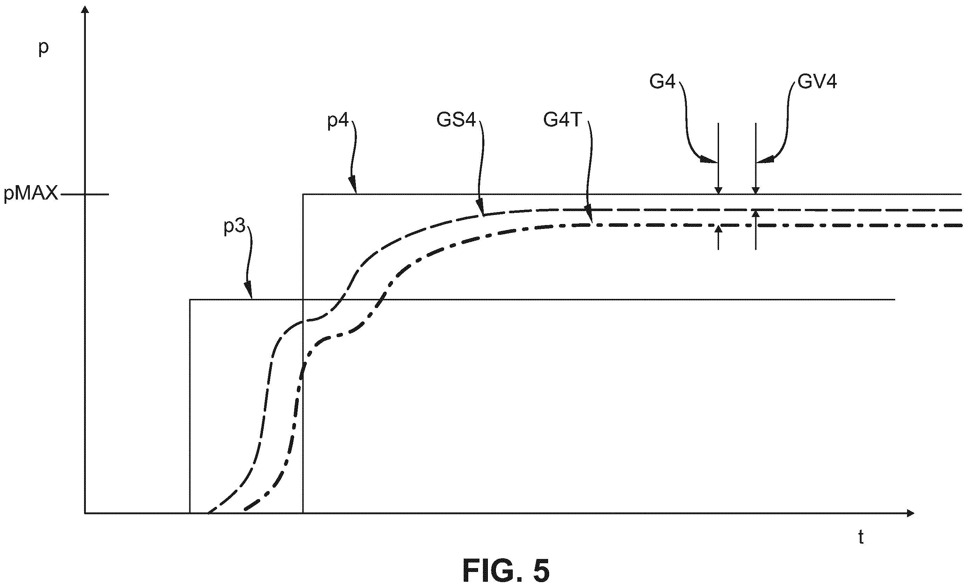

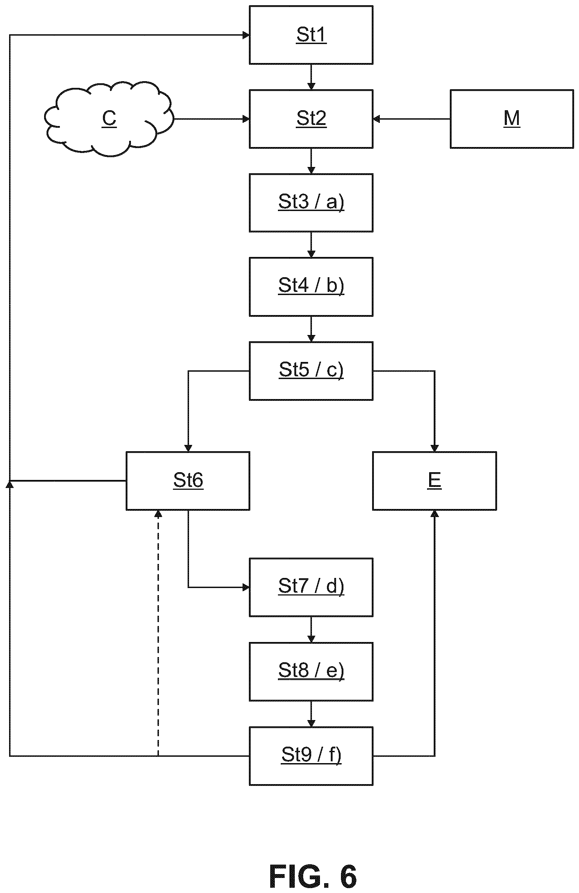

Ein solcher Verfahrensablauf ist in Fig. 6 dargestellt, während die Figuren 4 und 5 die verschiedenen für den ersten bzw. zweiten Druck indikative Werte in Form von Druckgradienten und Druckgradientenverläufe darstellen, und im Folgenden genau beschrieben werden. Es soll verstanden werden, dass auch andere Werte, wie insbesondere absolute Druckwerte, oder Druckgradienten in einem bestimmten Zeitintervall als für einen Druck indikative Werte genutzt werden können.

Gemäß Fig. 6 wird beispielsweise zunächst in Schritt St1 das Prüfverfahren initialisiert. In Schritt St2 können dann beispielsweise einem internen Speicher M in der zentralen Steuereinheit 220, oder der ersten oder zweiten elektronischen Steuereinheit ECU1, ECU2 Toleranzen, Soll-Verläufe und andere Vergleichswerte abgerufen werden. Alternativ ist es auch möglich, in Schritt St2 solche Werte über einen Cloud-Service C zu beziehen. In Schritt St3 kann dann der erste Druck p1 von dem ersten Ventilmodul 4 an dem ersten Wechselventilanschluss 2.1 ausgesteuert werden (vgl. Fig. 1-3). Wenn in diesem Schritt an dem zweiten Wechselventilanschluss 2.2 kein Druck ausgesteuert wird, sondern Umgebungsdruck p0 anliegt, wird der erste Druck p1, der an dem ersten Wechselventilanschluss 2.1 ausgesteuert ist, durch das Wechselventil 2 an dem dritten Wechselventilanschluss 2.3 bereitgestellt. Hierbei ergibt sich ein charakteristischer erster Druckgradient G1 sowie ein erster Druckgradientenverlauf G1T. Grafisch dargestellt ist dies in Fig. 4.

Fig. 4 illustriert (sowohl für den ersten Druck p1 als auch für den zweiten Druck p2) die Reaktion des Wechselventils 2. Wird der erste Druck p1, hier als Sprungfunktion dargestellt, an dem ersten Wechselventilanschluss 2.1 ausgesteuert, reagiert das Wechselventil 2 und steuert diesen Druck am dritten Wechselventilanschluss 2.3 aus. In Fig. 4 ist auch ein erster Sollverlauf GS1 für den ersten Druckgradientenverlauf G1T sowie ein erster Vergleichswert GV1 eingezeichnet. Wie sich aus Fig. 4 ergibt, liegt sowohl der erste Druckgradientenverlauf GS1 als auch der erste Druckgradient G1 unterhalb des ersten Soll-Verlaufs GS1 sowie des ersten Vergleichswerts GV1. Allerdings liegen beide noch innerhalb der ersten Toleranz T1, die beispielhaft nur an einer Stelle des Graphen eingezeichnet ist. Solange der erste Druckgradientenverlauf G1T und/oder der erste Druckgradient G1 innerhalb der ersten Toleranz T1 liegen, wird kein Fehler E ausgegeben. Das heißt, in Schritt St4 wird zunächst der erste Druckgradient G1 bzw. der erste Druckgradientenverlauf G1T am ersten Wechselventilanschluss 2.1 ermittelt und in Schritt St5 dann der Vergleich durchgeführt und ermittelt, ob der ermittelte Wert innerhalb der Toleranz T1 liegt. Liegt der ermittelte Wert innerhalb der Toleranz T1 wird in Schritt St6 das Verfahren beendet. Es kann dann in Schritt St1 wieder beginnen, beispielsweise nach einer vorgegebenen Zeit, dem Neustart des Fahrzeugs 200 oder dergleichen. Wird allerdings ein Wert ermittelt, der außerhalb der ersten Toleranz T1 liegt, wird ein Fehler E ausgegeben. Das Ausgeben des Fehlers E kann sowohl an eine übergeordnete Einheit, wie an die Einheit für autonomes Fahren 224, oder über eine Displayanzeige auch an den Fahrer des Fahrzeugs 200 erfolgen.

Es ist aber auch möglich, nach Schritt St6 das Wechselventil 2 weiter zu prüfen, und zwar insbesondere den zweiten Wechselventilanschluss 2.2. Wenn dies erfolgen soll, wird in Schritt St7 ein zweiter Druck p2 an einem zweiten Wechselventilanschluss 2.2 ausgesteuert, vorzugsweise während der erste Wechselventilanschluss 2.1 entlüftet ist, das heißt an diesem Umgebungsdruck p0 anliegt. In Schritt St8 wird dann ein zweiter Druckgradient G2 bzw. ein zweiter Druckgradientenverlauf G2T am zweiten Wechselventilanschluss 2.2 ermittelt. In Schritt St9 wird dann dieser ermittelte zweite Druckgradient G2 bzw. zweite Druckgradientenverlauf G2T mit einem zweiten vorbestimmten Vergleichswert GV2 und/oder einem zweiten Sollverlauf GS2 verglichen. Der zweite vorbestimmte Vergleichswert GV2 und der zweite Sollverlauf GS2 sind vorzugsweise bereits in Schritt St2 aus dem Speicher M bzw. der Cloud C abgerufen worden. In Schritt St9 wird dann wiederum ein Vergleich durchgeführt und, sofern die gemessenen Werte des zweiten Druckgradienten G2 oder des zweiten Druckgradientenverlaufs G2T innerhalb der zweiten Toleranz T2 liegen, wird entweder zu Schritt St6 zurückgekehrt und das Verfahren beendet oder zu Schritt St1, um das Verfahren erneut unmittelbar oder zu einem späteren Zeitpunkt zu starten. Wird allerdings in Schritt St9 festgestellt, dass die gemessenen Werte außerhalb der zweiten Toleranz T2 liegen, wird der Fehler E ausgegeben. Der zweite Druckgradientenverlauf G2T sowie der zweite Druckgradient G2 sind in Fig. 4 eingezeichnet.

Es ist aber auch möglich, dass an dem ersten und zweiten Wechselventilanschluss 2.1, 2.2 nicht streng nacheinander, das heißt sequenziell, der erste Druck p1 und der zweite Druck p2 ausgesteuert werden, sondern dass teilweise oder vollständig Drücke parallel ausgesteuert werden. Eine solche Darstellung ist in Fig. 5 gezeigt. Gemäß Fig. 5 wird in einem Verfahren zum Prüfen des Wechselventils 2 zunächst ein dritter Druck p3 an dem zweiten Wechselventilanschluss 2.2 ausgesteuert, wobei der dritte Druck p3 geringer ist als ein Maximaldruck pMAX, den das zweite Ventilmodul 6 aussteuern kann. Zu diesem Zeitpunkt ist zunächst der erste Wechselventilanschluss 2.1 noch entlüftet und Umgebungsdruck p0 liegt an. Nachdem der zweite Wechselventilanschluss 2.2 mit dem dritten Druck p3 belüftet wurde, wird nun der erste Wechselventilanschluss 2.1 mit einem vierten Druck p4 durch das erste Ventilmodul 4 belüftet, in dem in Fig. 5 gezeigten Ausführungsbeispiel mit dem Maximaldruck pMAX. Wenn das Wechselventil 2 korrekt funktioniert, müsste es nun umschlagen und nicht mehr den dritten Druck p3 vom zweiten Wechselventilanschluss 2.2 an den dritten Wechselventilanschluss 2.3 durchsteuern, sondern den vierten Druck p4 vom ersten Wechselventilanschluss 2.1 an den dritten Wechselventilanschluss 2.3 durchsteuern. Wiederum ergibt sich hier ein vierter Druckgradient G4 sowie ein vierter Druckgradientenverlauf G4T. **In** Fig. 5 ist auch der vierte Sollverlauf GS4 sowie der vierte Vergleichswert GV4 eingezeichnet. Auch hier kann wieder geprüft werden, ob der vierte Druckgradientenverlauf G4T ausreichend dem vierten Sollverlauf GS4 entspricht, und ob der vierte Druckgradient G4 innerhalb eines Toleranzbereichs (nicht eingezeichnet) für den vierten Vergleichswert GV4 liegt.

Ein weiteres Verfahren, das zum Prüfen des Wechselventils 2 umgesetzt werden kann, ist das folgende: Zunächst wird ein fünfter Druck p5 an dem ersten Wechselventilanschluss 2.1 ausgesteuert (vgl. Fig. 1). Der fünfte Druck p5 kann wiederum dem Maximaldruck pMAX entsprechen, oder ein leicht abgestufter Druck sein. Anschließend, gleichzeitig oder bereits vorher, wird an dem zweiten Wechselventilanschluss 2.2 ein sechster Druck p6 ausgesteuert, der vorzugsweise ein sehr geringer Druck ist, insbesondere ein Kleinstdruck oder der kleinstmögliche Druck, der mittels des zweiten Ventilmoduls 6 umsetzbar ist. Beispielsweise ist der sechste Druck p6 in einem Bereich von 0,01 bis 0,05 MPa. Anschließend wird wiederum der am zweiten Wechselventilanschluss 2.2 anliegende Druck über die Zeit erfasst. Dies wird mit dem zweiten Drucksensor 16 umgesetzt. Der erfasste Druck p6.2 wird beobachtet. Steigt dieser erfasste, beobachtete Druck p6.2 über die Zeit an, ist dies ein Indiz dafür, dass das Wechselventil 2 defekt ist und der fünfte Druck p5 zum zweiten Wechselventilanschluss 2.2 überströmt. Das heißt, übersteigt der auf diese Weise ermittelte Gradient einen ihm zugeordneten Schwellwert, wird ein Fehler E ermittelt und/oder ausgegeben. Um dies zu verifizieren, kann in einem weiteren Schritt dann der erste Wechselventilanschluss 2.1 auf Umgebungsdruck p0 entlüftet werden und wiederum der sechste Druck p6 am zweiten Wechselventilanschluss 2.2 ausgesteuert werden. Wiederum wird der anliegende Druck p6.2 beobachtet und wenn dieser nicht ansteigt, der entsprechende Gradient also in etwa 0 ist, spricht viel dafür, dass das Wechselventil 2 defekt ist. in diesem Fall wird dann der Fehler E ermittelt und/oder ausgegeben.

### Bezugszeichenliste (Bestandteil der Beschreibung)

- 2: Wechselventil
- 2.1: erster Wechselventilanschluss
- 2.2: zweiter Wechselventilanschluss
- 2.3: dritter Wechselventilanschluss
- 4: erstes Ventilmodul
- 6: zweites Ventilmodul
- 8: Bremsaktuator
- 10: erster Achsmodulator
- 12: zweiter Achsmodulator
- 14: erster Drucksensor
- 16: zweiter Drucksensor
- 20: Signalleitung
- 22: erste Ventilanordnung
- 24: erster Vorratsanschluss
- 26: zweite Ventilanordnung
- 28: zweiter Vorratsanschluss
- 100: pneumatisches System
- 102: elektronisch steuerbares pneumatisches Bremssystem
- 200: Fahrzeug
- 202: Nutzfahrzeug
- 204: Hinterachsbremskreis
- 206: Vorderachsbremskreis
- 208: Parkbremskreis
- 210: erster Druckluftvorrat
- 212: zweiter Druckluftvorrat
- 214: dritter Druckluftvorrat
- 220: Zentraleinheit
- 222: Fahrzeugbus
- 224: Einheit für autonomes Fahren
- 226: weiterer Bremsaktuator (VA)
- 228a, 228b: Hinterachsbremsaktuatoren
- 230: Vorderachsmodulator
- 232: Vorderachsbremssignalleitung
- 234a, 234b: ABS-Ventile
- 236: HInterachsmodulator
- 238: Hinterachsbremssignalleitung
- 240: Redundante Zentraleinheit
- 242: Interne Signalleitung
- 244: Redundanter Vorderachsmodulator
- 246a, 246b: Redundante Vorderachs-ABS-Ventile
- 248: Redundante Vorderachsbremssignalleitung
- 250: Weiteres Wechselventil
- 252: Redundanter Hinterachsmodulator
- 254a, 254b: Hinterachs-Wechselventile
- C: Cloud-Dienst
- E: Fehler
- ECU1: erste elektronische Steuereinheit
- ECU2: zweite elektronische Steuereinheit
- ECUZ: Elektronische Steuereinheit der Zentraleinheit
- G1: erster Druckgradient
- G2: zweiter Druckgradient
- G4: vierter Druckgradient
- G1T: erster Druckgradientenverlauf
- G2T: zweiter Druckgradientenverlauf
- G4T: vierter Druckgradientenverlauf
- GS1: erster Soll-Verlauf
- GS2: zweiter Soll-Verlauf
- GS4: dritter Soll-Verlauf
- GV1: erster Vergleichswert
- GV2: zweiter Vergleichswert
- GV4: vierter Vergleichswert
- M: Speicher
- T1: erste Toleranz
- T2: zweite Toleranz
- p1: erster Druck
- p2: zweiter Druck
- p3: dritter Druck
- p4: vierter Druck
- p5: fünfter Druck
- p6: sechster Druck
- P6.2: Beobachteter sechster Druck
- pBHA: Hinterachsbremsdruck
- pBVA: Vorderachsbremsdruck
- pMAX: Maximaldruck
- pV: Vorratsdruck
- SP1: erstes Drucksignal
- SP2: zweites Drucksignal

## Patentansprüche

1. Verfahren zum Prüfen eines Wechselventils (2) in einem pneumatischen System (100), vorzugsweise elektronisch steuerbares pneumatisches Bremssystem (102), wobei das Wechselventil (2) einen ersten Wechselventilanschluss (2.1), einen zweiten Wechselventilanschluss (2.2) und einen dritten Wechselventilanschluss (2.3) aufweist, wobei jeweils der höhere des am ersten Wechselventilanschluss (2.1) und zweiten Wechselventilanschluss (2.2) anliegenden Drucks (p1, p2) an dem dritten Wechselventilanschluss (2.3) ausgesteuert wird, wobei das Verfahren die Schritte umfasst:
a) Aussteuern eines ersten Drucks (p1) an dem ersten Wechselventilanschluss (2.1);
b) Ermitteln eines für den ersten Druck (p1) indikativen Werts (G1, G1T) am ersten Wechselventilanschluss (2.1); und
c) Vergleichen des für den ersten Druck indikativen Werts (G1, G1T) mit einem ersten hierfür vorgesehenen vorbestimmten Vergleichswert (GV1, GS1), und bei einer Abweichung, die größer als eine erste Toleranz (T1) ist: Ermitteln und/oder Ausgeben eines Fehlers (E) des Wechselventils (2), und
d) Aussteuern eines zweiten Drucks (p2) an dem zweiten Wechselventilanschluss (2.1);
e) Ermitteln eines für den zweiten Druck (p2) indikativen Werts (G2, G2T) am zweiten Wechselventilanschluss (2.2); und
f) Vergleichen des für den zweiten Druck indikativen Werts (G2, G2T) mit einem zweiten hierfür vorgesehenen vorbestimmten Vergleichswert (GV2, GS2), und bei einer Abweichung, die größer als eine zweite Toleranz (T2) ist: Ermitteln und/oder Ausgeben eines Fehlers (E) des Wechselventils (2).

2. Verfahren nach Anspruch 1, umfassend den Schritt:
g) Vergleichen einer Differenz aus dem für den ersten Druck (p1) indikativen Wert (G1) und dem für den zweiten Druck indikativen Wert (G2) mit einem vorbestimmten ersten Schwellwert; und bei Unterschreiten des ersten Schwellwerts: Ermitteln und/oder Ausgeben eines Fehlers (E) des Wechselventils (2).

3. Verfahren nach Anspruch 1, wobei in Schritt d) der zweite Druck (p2) am zweiten Wechselventilanschluss (2.2) ausgesteuert wird, während der erste Druck (p1) am ersten Wechselventilanschluss (2.1) bereits ausgesteuert ist.

4. Verfahren nach einem der vorstehenden Ansprüche, wobei der für den ersten Druck (p1) indikative Wert ein Druckgradient (G1) und der erste vorbestimmte Vergleichswert (GV1) ein erster Vergleichs-Druckgradient (GV1) ist.

5. Verfahren nach einem der vorstehenden Ansprüche, wobei der für den ersten Druck (p1) indikative Wert ein Druckgradientenverlauf (G1T) und der erste vorbestimmte Vergleichswert ein erster Soll-Verlauf (GS1) ist.

6. Verfahren nach einem der vorstehenden Ansprüche, umfassend die Schritte:
- Aussteuern eines dritten Drucks (p3), der geringer ist als ein Maximaldruck (pMAX), an dem zweiten Wechselventilanschluss (2.2);
- Aussteuern eines vierten Drucks (p4) an dem ersten Wechselventilanschluss (2.1), wobei der vierte Druck (p4) höher ist als der dritte Druck (p3);
- Ermitteln eines Druckgradientenverlaufs (G4T) über die Zeit (t) am ersten Wechselventilanschluss (2.1);
- Ermitteln einer Abweichung des ermittelten Druckgradientenverlaufs (G4T) von einem vorbestimmten Soll-Verlauf (GS4); und bei Feststellen einer Abweichung: Ermitteln und/oder Ausgeben eines Fehlers (E) des Wechselventils (2).

7. Verfahren nach einem der vorstehenden Ansprüche, umfassend die Schritte:
- Aussteuern eines fünften Drucks (p5) an dem ersten Wechselventilanschluss (2.1);
- Aussteuern eines sechsten Drucks (p6) an dem zweiten Wechselventilanschluss (2.2) während der fünfte Druck (p5) ausgesteuert ist, wobei der sechste Druck (p6) ein sehr geringer Druck ist;
- Erfassen eines am zweiten Wechselventilanschluss (2.2) anliegenden Drucks (p6.2) über die Zeit; und bei Ansteigen des am zweiten Wechselventilanschluss (2.2) anliegenden Drucks (p6.2): Ermitteln und/oder Ausgeben eines Fehlers (E) des Wechselventils (2).

8. Verfahren nach Anspruch 7, umfassend die Schritte:
- Entlüften des ersten Wechselventilanschlusses (2.1) vom fünften Druck (p5) auf Umgebungsdruck (p0) und Aussteuern des sechsten Drucks (p6) am zweiten Wechselventilanschlusses (2.2);
- Erfassen des am zweiten Wechselventilanschluss (2.2) anliegenden Drucks (p6.2) über die Zeit; und wenn der am zweiten Wechselventilanschluss (2.2) anliegende Druck (p6.2) innerhalb eines vorbestimmten Toleranzbereichs bleibt: Ermitteln und/oder Ausgeben eines Fehlers (E) des Wechselventils (2).

9. Verfahren nach einem der vorstehenden Ansprüche, umfassend den Schritt:
- Ermitteln des aktuellen Vorratsdrucks (pVT); wobei wenigstens der Schritt c) unter Berücksichtigung des ermittelten aktuellen Vorratsdrucks (pVT) ausgeführt wird.

10. Verfahren nach einem der vorstehenden Ansprüche, wobei wenigstens der erste vorbestimmte Vergleichswert ein basierend auf zuvor gemessenen Werten gelernter Wert ist.

11. Verfahren nach einem der vorstehenden Ansprüche, umfassend den Schritt:
- Abrufen wenigstens des ersten vorbestimmten Vergleichswerts (GV1, GV2, GV4) aus einem internen Speichermedium (M) und/oder drahtlos von einem Cloud-Dienst (C).

12. Verfahren nach einem der vorstehenden Ansprüche, wobei an den ersten Wechselventilanschluss (2.1) ein erstes Ventilmodul (4), vorzugsweise ein erster Achsmodulator (10), und an den zweiten Wechselventilanschluss (2.2) ein zweites Ventilmodul (6), vorzugsweise ein zweiter Achsmodulator (12), angeschlossen ist, wobei das erste und zweite Ventilmodul (4, 6) mittelbar oder unmittelbar elektronisch miteinander kommunizieren, und wobei der dritte Wechselventilanschluss (2.3) mit einem Verbraucher, vorzugsweise Bremsaktuator (8), verbunden ist,
wobei die Schritte während einer Bremsung eines Fahrzeugs (200) ausgeführt werden, und wobei der erste Druck (p1) ein erster Bremsdruck (pB1, pBVA, pBHA) zum Bremsen des Fahrzeugs (200) ist oder
wobei die Schritte in einem Fahrzeugstillstand ausgeführt werden, wobei das Verfahren ferner den Schritt umfasst:
- Empfangen eines Abfahrkontroll-Signals zum Ausführen einer Abfahrkontrolle; und in Antwort auf den Empfang des Abfahrkontroll-Signals: wenigstens Ausführen der Schritte a) bis c).

13. Pneumatisches System (100), vorzugsweise elektronisch steuerbares pneumatisches Bremssystem (102), für ein Fahrzeug (200), vorzugsweise Nutzfahrzeug (202), mit
einem Wechselventil (2), das einen ersten Wechselventilanschluss (2.1), einen zweiten Wechselventilanschluss (2.2) und einen dritten Wechselventilanschluss (2.3) aufweist, wobei jeweils der höhere des am ersten Wechselventilanschluss (2.1) und zweiten Wechselventilanschluss (2.2) anliegende Druck (p1, p2) an dem dritten Wechselventilanschluss (2.3) ausgesteuert wird;
einem ersten Ventilmodul (4), das mit dem ersten Wechselventilanschluss (2.1) verbunden ist, um an diesem einen ersten Druck (p1) auszusteuern und einen ersten Drucksensor (14) zum Erfassen eines für den ersten Druck (p1) indikativen Werts aufweist;
einem zweiten Ventilmodul (6), das mit dem zweiten Wechselventilanschluss (2.2) verbunden ist, um an diesem einen zweiten Druck (p2) auszusteuern und einen zweiten Drucksensor (16) zum Erfassen eines für den zweiten Druck (p2) indikativen Werts aufweist; und
einer elektronischen Steuereinheit (ECU1, ECU2), die mit der ersten und zweiten Ventileinheit (4, 6) verbunden ist zum Empfangen von ersten und zweiten Drucksignalen (SP1, SP2) der ersten und zweiten Drucksensoren (14, 16), wobei die elektronische Steuereinheit (ECU1, ECU2) ferner Mittel aufweist, die geeignet sind, die Schritte des Verfahrens nach einem der Ansprüche 1 bis 12auszuführen.

14. Pneumatisches System (100) nach Anspruch 13, wobei die erste Ventileinheit (4) als ein erster Achsmodulator (10) und die zweite Ventileinheit (6) als ein zweiter Achsmodulator (12) ausgebildet ist, und wobei der dritte Wechselventilanschluss (2.3) fluidleitend mit einem Bremsaktuator (8) verbunden ist.

15. Pneumatisches System (100) nach Anspruch 14, wobei der erste Achsmodulator (10) für einen Normalbetrieb des Fahrzeugs (200) ausgebildet und vorgesehen ist, und der zweite Achsmodulator (12) für einen Redundanzfall ausgebildet und vorgesehen ist, in welchem der erste Achsmodulator (10) nicht oder nicht richtig arbeiten kann.

16. Pneumatisches System (100) nach einem der Ansprüche 13 bis 15, wobei ein Pfad stromabwärts des dritten Wechselventilanschlusses (2.3) keinen weiteren Drucksensor aufweist.

17. Fahrzeug (200), vorzugsweise Nutzfahrzeug (202), mit einem pneumatischen System (100) nach einem der Ansprüche 13bis 16.

18. Computerprogramm, umfassend Befehle, die bewirken, dass das pneumatische System (100) nach Anspruch 13die Verfahrensschritte nach Anspruch 1 ausführt.

## Claims

1. Method for testing a shuttle valve (2) in a pneumatic system (100), preferably an electronically controllable pneumatic brake system (102), wherein the shuttle valve (2) has a first shuttle valve connection (2.1), a second shuttle valve connection (2.2) and a third shuttle valve connection (2.3), wherein the higher of the pressures (p1, p2) applied to the first shuttle valve connection (2.1) and second shuttle valve connection (2.2) is controlled at the third shuttle valve connection (2.3), wherein the method comprises the steps of:
a) controlling a first pressure (p1) at the first shuttle valve connection (2.1);
b) determining a value (G1, G1T) indicative of the first pressure (p1) at the first shuttle valve connection (2.1); and
c) comparing the value (G1, G1T) indicative of the first pressure with a first predetermined comparison value (GV1, GS1) provided for this purpose, and in the case of a deviation which is greater than a first tolerance (T1): determining and/or outputting an error (E) of the shuttle valve (2), and
d) controlling a second pressure (p2) at the second shuttle valve connection (2.1);
e) determining a value (G2, G2T) indicative of the second pressure (p2) at the second shuttle valve connection (2.2); and
f) comparing the value (G2, G2T) indicative of the second pressure with a second predetermined comparison value (GV2, GS2) provided for this purpose, and in the case of a deviation which is greater than a second tolerance (T2): determining and/or outputting an error (E) of the shuttle valve (2).

2. Method according to claim 1, comprising the step of:
g) comparing a difference between the value (G1) indicative of the first pressure (p1) and the value (G2) indicative of the second pressure with a predetermined first threshold value; and if the first threshold value is undershot: determining and/or outputting an error (E) of the shuttle valve (2).

3. Method according to claim 1, wherein in step d) the second pressure (p2) is controlled at the second shuttle valve connection (2.2), while the first pressure (p1) is already controlled at the first shuttle valve connection (2.1).

4. Method according to any of the preceding claims, wherein the value indicative of the first pressure (p1) is a pressure gradient (G1) and the first predetermined comparison value (GV1) is a first comparison pressure gradient (GV1).

5. Method according to any of the preceding claims, wherein the value indicative of the first pressure (p1) is a pressure gradient curve (G1T) and the first predetermined comparison value is a first target curve (GS1).

6. Method according to any of the preceding claims, comprising the steps of:
- controlling a third pressure (p3), which is lower than a maximum pressure (pMAX), at the second shuttle valve connection (2.2);
- controlling a fourth pressure (p4) at the first shuttle valve connection (2.1), wherein the fourth pressure (p4) is higher than the third pressure (p3);
- determining a pressure gradient curve (G4T) over time (t) at the first shuttle valve connection (2.1);
- determining a deviation of the determined pressure gradient curve (G4T) from a predetermined target curve (GS4); and if a deviation is detected:
determining and/or outputting an error (E) of the shuttle valve (2).

7. Method according to any of the preceding claims, comprising the steps of:
- controlling a fifth pressure (p5) at the first shuttle valve connection (2.1);
- controlling a sixth pressure (p6) at the second shuttle valve connection (2.2) while the fifth pressure (p5) is controlled, wherein the sixth pressure (p6) is a very low pressure;
- detecting a pressure (p6.2) applied to the second shuttle valve connection (2.2) over time; and if the pressure (p6.2) applied to the second shuttle valve connection (2.2) increases: determining and/or outputting an error (E) of the shuttle valve (2).

8. Method according to claim 7, comprising the steps of:
- venting the first shuttle valve connection (2.1) from the fifth pressure (p5) to ambient pressure (p0) and controlling the sixth pressure (p6) at the second shuttle valve connection (2.2);
- detecting the pressure (p6.2) applied to the second shuttle valve connection (2.2) over time; and if the pressure (p6.2) applied to the second shuttle valve connection (2.2) remains within a predetermined tolerance range:
determining and/or outputting an error (E) of the shuttle valve (2).

9. Method according to any of the preceding claims, comprising the step of:
- determining the current supply pressure (pVT); wherein at least step c) is carried out taking into account the determined current supply pressure (pVT).

10. Method according to any of the preceding claims, wherein at least the first predetermined comparison value is a value learned based on previously measured values.

11. Method according to any of the preceding claims, comprising the step of:
- retrieving at least the first predetermined comparison value (GV1, GV2, GV4) from an internal storage medium (M) and/or wirelessly from a cloud service (C).

12. Method according to any of the preceding claims, wherein a first valve module (4), preferably a first axle modulator (10), is connected to the first shuttle valve connection (2.1), and a second valve module (6), preferably a second axle modulator (12), is connected to the second shuttle valve connection (2.2),
wherein the first and second valve modules (4, 6) communicate directly or indirectly electronically with each other, and wherein the third shuttle valve connection (2.3) is connected to a consumer, preferably a brake actuator (8),
wherein the steps are carried out during braking of a vehicle (200), and wherein the first pressure (p1) is a first brake pressure (pB1, pBVA, pBHA) for braking the vehicle (200) or
wherein the steps are carried out when the vehicle is at a standstill, the method further comprising the step of:
- receiving a departure control signal for carrying out a departure control; and in response to receiving the departure control signal: at least carrying out steps a) to c).

13. Pneumatic system (100), preferably an electronically controllable pneumatic brake system (102) for a vehicle (200), preferably a commercial vehicle (202), comprising:
a shuttle valve (2), which has a first shuttle valve connection (2.1), a second shuttle valve connection (2.2) and a third shuttle valve connection (2.3), wherein the higher of the pressures (p1, p2) present at the first shuttle valve connection (2.1) and second shuttle valve connection (2.2) is controlled at the third shuttle valve connection (2.3);
a first valve module (4), which is connected to the first shuttle valve connection (2.1) in order to control a first pressure (p1) thereat and has a first pressure sensor (14) for detecting a value indicative of the first pressure (p1);
a second valve module (6), which is connected to the second shuttle valve connection (2.2) in order to control a second pressure (p2) thereat and has a second pressure sensor (16) for detecting a value indicative of the second pressure (p2); and
an electronic control unit (ECU1, ECU2), which is connected to the first and second valve units (4, 6) for receiving first and second pressure signals (SP1, SP2) from the first and second pressure sensors (14, 16), wherein the electronic control unit (ECU1, ECU2) further comprises means suitable for carrying out the steps of the method according to any of claims 1 to 12.

14. Pneumatic system (100) according to claim 13, wherein the first valve unit (4) is designed as a first axle modulator (10) and the second valve unit (6) as a second axle modulator (12), and wherein the third shuttle valve connection (2.3) is fluidly connected to a brake actuator (8).

15. Pneumatic system (100) according to claim 14, wherein the first axle modulator (10) is designed and provided for normal operation of the vehicle (200), and the second axle modulator (12) is designed and provided for a redundancy case in which the first axle modulator (10) cannot work or cannot work properly.

16. Pneumatic system (100) according to any of claims 13 to 15, wherein a path downstream of the third shuttle valve connection (2.3) has no further pressure sensor.

17. Vehicle (200), preferably a commercial vehicle (202), having a pneumatic system (100) according to any of claims 13 to 16.

18. Computer program comprising instructions that cause the pneumatic system (100) according to claim 13 to carry out the method steps according to claim 1.

## Revendications

1. Procédé permettant de tester une soupape à deux voies (2) dans un système pneumatique (100), de préférence un système de freinage pneumatique (102) à commande électronique, dans lequel la soupape à deux voies (2) présente un premier raccord de soupape à deux voies (2.1), un deuxième raccord de soupape à deux voies (2.2) et un troisième raccord de soupape à deux voies (2.3), dans lequel la plus élevée des pressions (p1, p2) appliquées au premier raccord de soupape à deux voies (2.1) et au deuxième raccord de soupape à deux voies (2.2) est respectivement commandée au niveau du troisième raccord de soupape à deux voies (2.3), dans lequel le procédé comprend les étapes consistant à :
a) commander une première pression (p1) au niveau du premier raccord de soupape à deux voies (2.1) ;
b) déterminer une valeur (G1, G1T) indicative de la première pression (p1) au niveau du premier raccord de soupape à deux voies (2.1) ; et
c) comparer la valeur (G1, G1T) indicative de la première pression à une première valeur de comparaison (GV1, GS1) prédéfinie prévue à cet effet, et, en cas d'écart supérieur à une première tolérance (T1) : déterminer et/ou afficher un défaut (E) de la soupape à deux voies (2), et
d) commander une deuxième pression (p2) au niveau du deuxième raccord de soupape à deux voies (2.1) ;
e) déterminer une valeur (G2, G2T) indicative de la deuxième pression (p2) au niveau du deuxième raccord de soupape à deux voies (2.2) ; et
f) comparer la valeur (G2, G2T) indicative de la deuxième pression à une deuxième valeur de comparaison (GV2, GS2) prédéfinie prévue à cet effet, et, en cas d'écart supérieur à une seconde tolérance (T2) : déterminer et/ou afficher un défaut (E) de la soupape à deux voies (2).

2. Procédé selon la revendication 1, comprenant l'étape consistant à :
g) comparer une différence entre la valeur (G1) indicative de la première pression (p1) et la valeur (G2) indicative de la deuxième pression à une première valeur seuil prédéfinie ; et en cas de sous-dépassement de la première valeur seuil : déterminer et/ou afficher un défaut (E) de la soupape à deux voies (2).

3. Procédé selon la revendication 1, dans lequel, à l'étape d), la deuxième pression (p2) est commandée au niveau du deuxième raccord de soupape à deux voies (2.2), alors que la première pression (p1) est déjà commandée au niveau du premier raccord de soupape à deux voies (2.1).

4. Procédé selon l'une des revendications précédentes, dans lequel la valeur indicative de la première pression (p1) est un gradient de pression (G1) et la première valeur de comparaison (GV1) prédéfinie est un premier gradient de pression de comparaison (GV1).

5. Procédé selon l'une des revendications précédentes, dans lequel la valeur indicative de la première pression (p1) est une courbe de gradient de pression (G1T) et la première valeur de comparaison prédéfinie est une première courbe de consigne (GS1).

6. Procédé selon l'une des revendications précédentes, comprenant les étapes consistant à :
- commander une troisième pression (p3), qui est inférieure à une pression maximale (pMAX), au niveau du deuxième raccord de soupape à deux voies (2.2) ;
- commander une quatrième pression (p4) au niveau du premier raccord de soupape à deux voies (2.1), dans lequel la quatrième pression (p4) est supérieure à la troisième pression (p3) ;
- déterminer une courbe de gradient de pression (G4T) en fonction du temps (t) au niveau du premier raccord de soupape à deux voies (2.1) ;
- déterminer un écart de la courbe de gradient de pression (G4T) déterminée par rapport à une courbe de consigne (GS4) prédéfinie ; et, en cas de constatation d'un écart : déterminer et/ou afficher un défaut (E) de la soupape à deux voies (2).

7. Procédé selon l'une des revendications précédentes, comprenant les étapes consistant à :
- commander une cinquième pression (p5) au niveau du premier raccord de soupape à deux voies (2.1) ;
- commander une sixième pression (p6) au niveau du deuxième raccord de soupape à deux voies (2.2) pendant que la cinquième pression (p5) est commandée, dans lequel la sixième pression (p6) est une très faible pression ;
- détecter une pression (p6.2) appliquée au deuxième raccord de soupape à deux voies (2.2) en fonction du temps ; et en cas d'augmentation de la pression (p6.2) appliquée au deuxième raccord de soupape à deux voies (2.2) : déterminer et/ou afficher un défaut (E) de la soupape à deux voies (2).

8. Procédé selon la revendication 7, comprenant les étapes consistant à :
- purger le premier raccord de soupape à deux voies (2.1) de la cinquième pression (p5) à pression ambiante (p0) et commander la sixième pression (p6) au niveau du deuxième raccord de soupape à deux voies (2.2) ;
- détecter la pression (p6.2) appliquée au deuxième raccord de soupape à deux voies (2.2) en fonction du temps ; et lorsque la pression (p6.2) appliquée au deuxième raccord de soupape à deux voies (2.2) reste dans une plage de tolérance prédéfinie : déterminer et/ou afficher un défaut (E) de la soupape à deux voies (2).

9. Procédé selon l'une des revendications précédentes, comprenant l'étape consistant à :
- déterminer la pression de réserve actuelle (pVT) ; dans lequel au moins l'étape c) est exécutée en tenant compte de la pression de réserve actuelle (pVT) déterminée.

10. Procédé selon l'une des revendications précédentes, dans lequel au moins la première valeur de comparaison prédéfinie est une valeur apprise sur la base de valeurs mesurées précédemment.

11. Procédé selon l'une des revendications précédentes, comprenant l'étape consistant à :
- récupérer au moins la première valeur de comparaison (GV1, GV2, GV4) prédéfinie à partir d'un support de stockage interne (M) et/ou sans fil à partir d'un service en nuage (C).

12. Procédé selon l'une des revendications précédentes, dans lequel un premier module de soupape (4), de préférence un premier modulateur d'essieu (10), est raccordé au premier raccord de soupape à deux voies (2.1) et un second module de soupape (6), de préférence un second modulateur d'essieu (12), est raccordé au deuxième raccord de soupape à deux voies (2.2),
dans lequel le premier et le deuxième module de soupape (4, 6) communiquent entre eux indirectement ou directement par voie électronique, et dans lequel le troisième raccord de soupape à deux voies (2.3) est relié à un consommateur, de préférence un actionneur de frein (8),
dans lequel les étapes sont exécutées pendant un freinage d'un véhicule (200), et dans lequel la première pression (p1) est une première pression de freinage (pB1, pBVA, pBHA) pour le freinage du véhicule (200) ou
dans lequel les étapes sont exécutées à l'arrêt du véhicule, dans lequel le procédé comprend en outre l'étape consistant à :
- recevoir un signal de contrôle de départ pour effectuer un contrôle de départ ; et en réponse à la réception du signal de contrôle de départ : au moins exécuter les étapes a) à c).

13. Système pneumatique (100), de préférence système de freinage pneumatique (102) à commande électronique, pour un véhicule (200), de préférence un véhicule utilitaire (202), comportant
une soupape à deux voies (2) qui présente un premier raccord de soupape à deux voies (2.1), un deuxième raccord de soupape à deux voies (2.2) et un troisième raccord de soupape à deux voies (2.3), dans lequel la plus élevée des pressions (p1, p2) appliquées au premier raccord de soupape à deux voies (2.1) et au deuxième raccord de soupape à deux voies (2.2) est respectivement commandée au niveau du troisième raccord de soupape à deux voies (2.3) ;
un premier module de soupape (4) qui est relié au premier raccord de soupape à deux voies (2.1) pour commander une première pression (p1) au niveau de celui-ci, et qui présente un premier capteur de pression (14) permettant de détecter une valeur indicative de la première pression (p1) ;
un second module de soupape (6) qui est relié au deuxième raccord de soupape à deux voies (2.2) pour commander une deuxième pression (p2) au niveau de celui-ci, et qui présente un second capteur de pression (16) permettant de détecter une valeur indicative de la deuxième pression (p2) ; et
une unité de commande électronique (ECU1, ECU2) reliée à la première et à la deuxième unité de soupape (4, 6) pour la réception de premier et second signaux de pression (SP1, SP2) des premier et second capteurs de pression (14, 16), dans lequel l'unité de commande électronique (ECU1, ECU2) comprend en outre des moyens adaptés pour exécuter les étapes du procédé selon l'une des revendications 1 à 12.

14. Système pneumatique (100) selon la revendication 13, dans lequel la première unité de soupape (4) est conçue sous la forme d'un premier modulateur d'essieu (10) et la seconde unité de soupape (6) est conçue sous la forme d'un second modulateur d'essieu (12), et dans lequel le troisième raccord de soupape à deux voies (2.3) est relié par conduction de fluide à un actionneur de frein (8).

15. Système pneumatique (100) selon la revendication 14, dans lequel le premier modulateur d'essieu (10) est conçu et prévu pour un fonctionnement normal du véhicule (200), et le second modulateur d'essieu (12) est conçu et prévu pour un cas de redondance dans lequel le premier modulateur d'essieu (10) ne peut pas fonctionner ou ne peut pas fonctionner correctement.

16. Système pneumatique (100) selon l'une des revendications 13 à 15, dans lequel un chemin en aval du troisième raccord de soupape à deux voies (2.3) ne comprend aucun autre capteur de pression.

17. Véhicule (200), de préférence véhicule utilitaire (202), comportant un système pneumatique (100) selon l'une des revendications 13 à 16.

18. Programme informatique comprenant des instructions qui amènent le système pneumatique (100) selon la revendication 13 à exécuter les étapes de procédé selon la revendication 1.
